# EUROPEAN PATENT SPECIFICATION

(11) **EP 3 718 406 B1**
(45) Date of publication and mention of the grant of the patent: **15.12.2021**
(21) Application number: 20156100.8
(22) Date of filing: 07.02.2020
(51) Int. Cl.: A01N 43/56, A01P 3/00

(54) **METHOD FOR CONTROLLING NET BLOTCH AND/OR RAMULARIA RESISTANT TO SUCCINATE DEHYDROGENASE INHIBITOR FUNGICIDES**
VERFAHREN ZUR BEKÄMPFUNG DER NETZFLECKENKRANKHEIT UND/ODER VON RAMULARIA MIT BESTÄNDIGKEIT GEGEN SUCCINATDEHYDROGENASEHEMMERFUNGIZIDE
PROCÉDÉ DE LUTTE CONTRE LA RAYURE RÉTICULÉE ET/OU LA RAMULARIOSE RÉSISTANTE AUX FONGICIDES INHIBITEURS DE SUCCINATE DÉSHYDROGÉNASE

(30) Priority: 02.04.2019 EP 19166838
(43) Date of publication of application: 07.10.2020
(73) Proprietor: BASF SE, 67056 Ludwigshafen am Rhein (DE)
(72) Inventor: Strobel, Dieter, 67117 Limburgerhof (DE); Stammler, Gerd, 67117 Limburgerhof (DE); Dos Santos, Paulo Sergio Jose, 67117 Limburgerhof (DE); Gewehr, Markus, 67117 Limburgerhof (DE); Medinger, Manuel, 67117 Limburgerhof (DE)
(74) Representative: BASF IP Association

(56) References cited:
- WO-A1-2018/098216
- WO-A1-2018/098222
- WO-A2-2010/063700
- "Pydiflumetofen", , 1 June 2018 (2018-06-01), pages 1-2, XP055590130, Retrieved from the Internet: URL:https://www.mda.state.mn.us/sites/defa ult/files/inline-files/Pydiflumetofen.pdf [retrieved on 2019-05-20]
- Impey: "How to fight fungicide-reistant ramularia in spring barley", , 18 February 2018 (2018-02-18), pages 1-5, XP055590562, Retrieved from the Internet: URL:https://www.fwi.co.uk/arable/fight-fun gicide-resistant-ramularia-spring-barley [retrieved on 2019-05-21]
- R. Allison: "SDHI fungicide resistance discovered in key barley disease", , 10 February 2017 (2017-02-10), pages 1-3, XP055590792, Retrieved from the Internet: URL:https://www.fwi.co.uk/arable/sdhi-fung icide-resistance-discovered-in-key-barley- disease [retrieved on 2019-05-22]
- MARTA J PIOTROWSKA ET AL: "Characterisation of Ramularia collo-cygni laboratory mutants resistant to succinate dehydrogenase inhibitors : SDHIs resistance in Rcc lab mutants", PEST MANAGEMENT SCIENCE, vol. 73, no. 6, 16 November 2016 (2016-11-16), pages 1187-1196, XP055590817, BOGNOR REGIS; GB ISSN: 1526-498X, DOI: 10.1002/ps.4442
- REHFUS ET AL.: "Sensitivity of Pyrenophora teres to Succinate Dehydrogenase Inhibitors in Europe Sensitivity of Pyrenophora teres to Succinate Dehydrogenase Inhibitors in Europe", MODERN FUNGICIDES AND ANTIFUNGAL COMPOUNDS VIII, 1 January 2017 (2017-01-01), pages 175-180, XP055590555, ISBN: 978-3-941261-15-0
- Gerd Stammler ET AL: "Succinate Dehydrogenase Inhibitor (SDHI) Working Group Protocol of the discussions and use recommendations of the SDHI Working Group of the Fungicide Resistance Action Committee (FRAC)", Meeting on December 11/12, 2018, 19 January 2019 (2019-01-19), pages 1-18, XP055718266, Retrieved from the Internet: URL:https://www.frac.info/docs/default-sou rce/working-groups/sdhi-fungicides/sdhi-me eting-minutes/minutes-of-the-2018-sdhi-mee ting-11-12th-of-december-2018-with-recomme ndations-for-2019.pdf?sfvrsn=6ce1489a_2 [retrieved on 2020-07-27]

## Description

The present invention relates to a method for controlling Net blotch and/or Ramularia leaf spot resistant or tolerant to succinate dehydrogenase inhibitor fungicides like Fluxapyroxad, Bixafen, Benzovindiflupyr, Isoflucypram and Fluindapyr, on barley plants, comprising treating the plants, their seed or the soil with a fungicidally effective amount of Pydiflumetofen.

One task the farmer is faced with in relation to the use of pesticides is that the repeated and exclusive application of an individual pesticidal compound leads in many cases to a rapid selection of harmful fungi, which have developed acquired resistance against the active compound in question. Therefore there is a need for pest control agents that help prevent or overcome such upcoming resistance.

*Pyrenophora teres* is a necrotrophic fungal pathogen causing net blotch on barley, which is currently the most dominant barley disease in Western Europe.

*Ramularia collo-cygni* is a fungal pathogen which has gained increasing importance in Europe as the causal agent of Ramularia leaf spot, a devastating barley disease.

Control of Net blotch and Ramularia leaf spot is becoming more and more difficult for farmers due to the capability of the fungi to develop resistance to widely used powerful fungicidal agents.

So far, succinate dehydrogenase inhibitor fungicides, hereinafter referred to as "SDHI fungicides" have been successfully applied to combat Net blotch and/or Ramularia leaf spot.

However, SDHI fungicides loose their activity due to the development of resistance in different plant pathogenic fungi (Stammler, G., Wolf, A., Glättli, A. and Klappach, K. (2015). Respiration inhibitors: Complex II. In: Fungicide Resistance in Plant Pathogens (eds. H. Ishii, D. Hollomon), pp 102-117, Springer Verlag).

Most recently, SDHI resistance outbreaks in Net blotch and Ramularia leaf spot are reported in several European countries such as Belgium, France, Germany, Ireland, the Netherlands and the United Kingdom, with moderate to high frequencies of insensitive isolates (www.frac.info).

SDHI resistance is of complex nature, since different mutations in the genes of the subunits (B, C and D), which make up the ubiquinone and SDHI binding site of the complex II could be found.

Net blotch strains resistant or tolerant to SDHI funigcides contain, for example, a G79R and/or N75S mutation in the succinate dehydrogenase subunit C gene and/or a D145G mutation in the succinate dehydrogenase subunit D gene,

in particular a G79R and/or N75S *mutation in the succinate dehydrogenase subunit C gene.* Ramularia leaf spot strains resistant or tolerant to SDHI fungicides contain, for example, a N224T mutation in the succinate dehydrogenase subunit B gene and/or a G171D, H146R, H153R and/or N87S mutation in the succinate dehydrogenase subunit C gene.

Surprisingly, we have found that the application of Pydiflumetofen show an unexpected fungicidal action towards Net blotch and/or Ramularia leaf spot, being resistant or tolerant against SDHI fungicides like Fluxapyroxad, Bixafen, Benzovindiflupyr, Isoflucypram and Fluindapyr.

Resistant or tolerant means that SDHI funigcides like Fluxapyroxad, Bixafen, Benzovindiflupyr, Isoflucypram and Fluindapyr are less efficient in controlling the fungal strains with the indicated mutations, compared to the fungal strains without those mutuations.

The present invention comprises a method for controlling Net blotch and/or Ramularia leaf spot that is already resistant to SDHI fungicides like Fluxapyroxad, Bixafen, Benzovindiflupyr, Isoflucypram and Fluindapyr on barley, comprising treating the plants, their seed or the soil with a fungicidally effective amount of Pydiflumetofen.

In one embodiment, the method comprises treating the barley plants with a fungicidally effective amount of Pydiflumetofen.

In a further embodiment, the method comprises treating barley seeds with a fungicidally effective amount of Pydiflumetofen.

Thus, in a preferred embodiment, the present invention relates to a method for controlling Net blotch, that is resistant or tolerant to SDHI fungicides like Fluxapyroxad, Bixafen, Benzovindiflupyr, Isoflucypram and Fluindapyr, on barley, comprising treating the barley plants, their seed or the soil on which the barley plant grow with a fungicidally effective amount of Pydiflumetofen.

In a further preferred embodiment, the present invention relates to a method for controlling Ramularia leaf spot, that is resistant to SDHI fungicides like Fluxapyroxad, Bixafen, Benzovindiflupyr, Isoflucypram and Fluindapyr, on barley, comprising treating the barley plants, their seed or the soil on which the barley plants grow with a fungicidally effective amount of Pydiflumetofen.

In a further preferred embodiment, the method comprises treating barley plants with a fungicidally effective amount of Pydiflumetofen.

In a further preferred embodiment, the method comprises treating barley seeds with a fungicidally effective amount of Pydiflumetofen.

Pydiflumetofen and its fungicidal activity is known from WO 2010/063700.

The term "plant propagation material" is to be understood to denote all the generative parts of the plant in particular seeds.

Barley plants as well as the propagation material of said plants include all genetically modified barley plants or transgenic plants, e.g. crops which tolerate the action of certain herbicides, fungicides or insecticides owing to breeding, including genetic engineering methods, or barley plants which have modified characteristics in comparison with existing plants, which can be generated for example by traditional breeding methods and/or the generation of mutants, or by recombinant procedures.

For example, Pydiflumetofen can be applied (as seed treatment, spray treatment, in furrow or by any other means) also to plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

For use according to the present invention, Pydiflumetofen can be converted into customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gammabutyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesi-um sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers. Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formal-dehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone and the copolymers therof.

Examples for thickeners (i. e. compounds that impart a modified flowability to formulations, i. e. high viscosity under static conditions and low viscosity during agitation) are polysaccharides and organic and anorganic clays such as Xanthan gum (Kelzan^{®}, CP Kelco, U.S.A.), Rhodopol^{®} 23 (Rhodia, France), Veegum^{®} (R.T. Vanderbilt, U.S.A.) or Attaclay^{®} (Engelhard Corp., NJ, USA).

Bactericides may be added for preservation and stabilization of the formulation. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives such as alkylisothiazolinones and benzisothiazolinones (Acticide^{®} MBS from Thor Chemie).

Examples for suitable anti-freezing agents are ethylene glycol, propylene glycol, urea and glycerin.

Examples for anti-foaming agents are silicone emulsions (such as e. g. Silikon^{®} SRE, Wacker, Germany or Rhodorsil^{®}, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Examples for tackifiers or binders are polyvinylpyrrolidons, polyvinylacetates, polyvinyl alcohols and cellulose ethers (Tylose^{®}, Shin-Etsu, Japan).

Powders, materials for spreading and dusts can be prepared by mixing or conco-mitantly grinding the compounds the respective active compounds present in the inventive mixtures and, if appropriate, further active substances, with at least one solid carrier.

Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nut-shell meal, cellulose powders and other solid carriers.

Examples of formulation types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF), herein further below exemplified in detail:
1. Composition types for dilution with water
   i) Water-soluble concentrates (SL, LS)
      10 parts by weight of Pydiflumetofen are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.
   ii) Dispersible concentrates (DC)
      20 parts by weight of Pydiflumetofen are dissolved in 70 parts by weight of cyclohexanone with addition of 10 parts by weight of a dispersant, e. g. poly-vinylpyrrolidone. Dilution with water gives a dispersion. The active substance content is 20% by weight.
   iii) Emulsifiable concentrates (EC)
      15 parts by weight of Pydiflumetofen are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.
   iv) Emulsions (EW, EO, ES)
      25 parts by weight of Pydiflumetofen are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a ho-mogeneous emulsion. Dilution with water gives an emulsion. The composition has an active substance content of 25% by weight.
   v) Suspensions (SC, OD, FS)
      In an agitated ball mill, 20 parts by weight of Pydiflumetofen are comminuted with addition of 10 parts by weight of dispersants and wetting agents and 70 parts by weight of water or an organic solvent to give a fine active substance sus-pension. Dilution with water gives a stable suspension of the active substance. The active substance content in the composition is 20% by weight.
   vi) Water-dispersible granules and water-soluble granules (WG, SG)
      50 parts by weight of Pydiflumetofen are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.
   vii) Water-dispersible powders and water-soluble powders (WP, SP, SS, WS)
      75 parts by weight of Pydiflumetofen are ground in a rotor-stator mill with addition of 25 parts by weight of dispersants, wetting agents and silica gel. Dilution with water gives a stable dispersion or solution of the active substance. The active substance content of the composition is 75% by weight.
   viii) Gel (GF)
      In an agitated ball mill, 20 parts by weight of Pydiflumetofen are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.
2. Composition types to be applied undiluted
   ix) Dustable powders (DP, DS)
      5 parts by weight of Pydiflumetofen are ground finely and mixed intimately with 95 parts by weight of finely divided kaolin. This gives a dustable compo-sition having an active substance content of 5% by weight.
   x) Granules (GR, FG, GG, MG)
      0.5 parts by weight of Pydiflumetofen are ground finely and associated with 99.5 parts by weight of carriers. Current methods are extrusion, spray-drying or the fluidized bed. This gives granules to be applied undiluted having an active sub-stance content of 0.5% by weight.
   xi) ULV solutions (UL)
      10 parts by weight of Pydiflumetofen are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substances.

Pydiflumetofen can be used as such or in the form of compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compositions.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of Pydiflumetofen.

Pydiflumetofen may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to Pydiflumetofen, if appropriate not until immediately prior to use (tank mix). These agents can be admixed with pydiflumetofen in a weight ratio of 1:100 to 100:1, preferably 1:10 to 10:1.

Agricultural compositions may also contain fertilizers such as ammonium nitrate, urea, potash, and superphosphate, phytotoxicants and plant growth regulators and safeners. These may be used sequentially or in combination with the above-described ready-to-use preparations, if appropriate also added only immediately prior to use (tank mix). For example, the plant(s) may be sprayed with a composition of this invention either before or after being treated with the fertilizers.

Pyidimetoflufen is applied by treating the fungi or the plants, plant propagation materials (preferably seeds), materials or soil to be protected from fungal attack with a pesticidally effective amount of Pydiflumetofen. The application can be carried out both before and after the infection of the materials, plants or plant propagation materials (preferably seeds) by the pests.

In general, "pesticidally effective amount" means the amount of Pydiflumetofen or of compositions comprising Pydiflumetofen needed to achieve an observable effect on growth, including the effects of necrosis, death, retardation, prevention, and removal, destruction, or otherwise diminishing the occurrence and activity of the target organism. The pesticidally effective amount can vary. A pesticidally effective amount will also vary according to the prevailing conditions such as desired pesticidal effect and duration, weather, target species, locus, mode of application, and the like.

When preparing the compositions comprising Pydiflumetofen, it is preferred to employ the pure active compound, to which optoinally further active compounds against pests, such as insecticides, herbidices, fungicides or else herbicidal or growth-regulating active compounds or fertilizers can be added as further active components according to need.

Preferably, Pydiflumetofen is employed by treating the fungi or the plants or soil to be protected from fungal attack via foliar application with a fungicidal effective amount of the active compound. Also herein, the application can be carried out both before and after the infection of the plants by the pests.

In the method of combating harmful fungi depending on the type of compound and the desired effect, the application rates of the mixtures according to the invention are from 0,1 g/ha to 10000 g/ha, preferably 2 g/ha to 2500 g/ha, more preferably from 5 to 1000 g/ha, most prefarebly from 10 to 750 g/ha, in particular from 20 to 700 g/ha.

In an alternative embodiment of the invention, the inventive mixtures are used for the protection of the seed and the seedlings' roots and shoots, preferably the seeds as set forth above.

For seed treatment purposes, the weight ratio in the inventive mixtures generally depends from the properties of the compounds of the inventive mixtures.

Compositions, which are especially useful for seed treatment are e.g.:
- A: Soluble concentrates (SL, LS)
- D: Emulsions (EW, EO, ES)
- E: Suspensions (SC, OD, FS)
- F: Water-dispersible granules and water-soluble granules (WG, SG)
- G: Water-dispersible powders and water-soluble powders (WP, SP, WS)
- H: Gel-Formulations (GF)
- I: Dustable powders (DP, DS)

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, prefer-ably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from 10 to 750 g/l of the active(s)) .

The invention also relates to the propagation products of plants, and especially the seed comprising, that is, coated with and/or containing,Pydiflumetofen. The plant propagation material (preferably seed) comprises Pydiflumetofen in an amount of from 0.1 g to 10 kg per 100 kg of plant propagation material (preferably seed), preferably 0.1 g to 1 kg per 100 kg of plant propagation material (preferably seed).

The invention is further illustrated, but not limited by the following practical examples:

### Example 1 - Field experience with net blotch

Trials were conducted under field conditions. Winter barley was planted and grown under standard conditions with adequate supply of water and nutrients. At BBCH 32-49, an application of the test compounds was made. No other compounds were applied for pathogen control. The disease incidences for net blotch *(Pyrenophora teres)* were evaluated on the specific leaf level 39-54 days after the fungicide treatment. Disease levels were converted into efficacies. An efficacy of 0 means that the level of the treated plants corresponds to that of the untreated control plants; an efficacy of 100 means that the treated plants had no disease at all.

SDHI resistance monitoring was conducted by analyzing net blotch population out of the untreated control. Figures in the following Table 1 indicate the level of identified mutations, which are known to compromise the efficacy of SDHI fungicides (cf. Rehfus A., Miessner S., Janosch A., Strobel D., Bryson R. and Stammler G. (2016), Emergence of succinate dehydrogenase inhibitor resistance of Pyrenophora teres in Europe. Pest Management Science 72, 1977-1988).

**Table 1: Net blotch efficacy [%] of SDHI fungicides in winter barley 2018 at various locations with different levels of SDHI resistance (expressed in quantification of the location of the main mutations).**

| SDHI compound | 9 a.i./ha | Germany (Ruchheim) c.v. Noveta 12% C-G79R 66% D-D145G | Germany (Ruchheim) c.v. Ketos 23% C-G79R 49% C-N75S | France (Coinces) c.v. Passerel 51% C-G79R 13% C-N75S | France (Marchelepot) c.v. Etincel 51% C-G79R 11% D-D145G 4% C-N75S | France (Marchelepot) c.v. Ketos 53% C-G79R 3% D-D145G |
|---|---|---|---|---|---|---|
| Fluxapyroxad | 75 | 54 | 76 | 48 | 15 | 18 |
| Benzovindiflupyr | 75 | 60 | 50 | 37 | 7 | 1 |
| Pydiflumetofen* | 75 | 56 | **81** | **86** | **81** | **71** |
| Isoflucypram* | 75 | 46 | 56 | 64 | 3 | 1 |
| Fluindapyr* | 75 | 54 | 67 | 69 | 15 | 4 |

| | | | | | | |
|---|---|---|---|---|---|---|
| * In mixture with adjuvant to optimize field performance in the absence of a final formulation | | | | | | |

Pydiflumetofen showed on sites with high SDHI resistance a surprisingly high activity against Net blotch, compared to the other four SDHIs tested.

### Example 2 - Field experience with Ramularia

Trials were conducted under field conditions. Winter barley was planted and grown under standard conditions with adequate supply of water and nutrients. At BBCH 39-45, an application of the test compounds was made. No other compounds were applied for pathogen control. The disease incidences for Ramularia (*Ramularia collo-cygni*) were evaluated on the specific leaf level 38-40 days after the fungicide treatment. Disease levels were converted into efficacies. An efficacy of 0 means that the level of the treated plants corresponds to that of the untreated control plants; an efficacy of 100 means that the treated plants had no disease at all.

SDHI resistance monitoring was conducted by obtaining monosporic isolates which were derived from leaf samples and tested on agar plates with different fungicides concentrations. Out of the results, ED₅₀ values were calculated. The test substance was fluxapyroxad, and isolates which show an ED_{50 fluxapyroxad} > 1 ppm are considered as SDHI-resistant. Figures indicate the amount of resistant isolates per sample [%]

**Table 2: Ramularia efficacy [%] of SDHI fungicides in winter barley 2018 at locations with different levels of SDHI resistance (% of isolates with ED_{50 fluxapyroxad} > 1ppm).**

| SDHI compound | 9 a.i./ha | France (Bucy Saint Liphard) c.v. Esterel 89% SDHI res | Germany (Gronau) c.v. Ketos 10-30% SDHI res. | Germany (Gronau) c.v. Finita 10-30% SDHI res. |
|---|---|---|---|---|
| Fluxapyroxad | 75 | 37 | 9 | 4 |
| Benzovindiflupyr | 75 | 39 | 39 | 33 |
| Pydiflumetofen* | 75 | **75** | **97** | **88** |
| Isoflucypram* | 75 | 33 | 19 | 16 |
| Fluindapyr* | 75 | 56 | 56 | 27 |

| | | | | |
|---|---|---|---|---|
| * In mixture with adjuvant to optimize field performance in the absence of a final formulation | | | | |

Pydiflumetofen showed on all sites with proven SDHI resistance a surprising high activity against Ramularia, compared to other SDHIs tested.

## Claims

1. A method for controlling Net blotch and/or Ramularia leaf spot on barley, comprising treating the plants, their seed or the soil with a fungicidally effective amount of Pydiflumetofen, wherein the Net bloch contains a G79R and/or N75S mutation in the succinate dehydrogenase subunit C gene and/or a D145G mutation in the succinate dehydrogenase subunit D gene, and the Ramularia contains a N224T mutation in the succinate dehydrogenase subunit B gene and/or a G171D, H146R, H153R and/or N87S mutation in the succinate dehydrogenase subunit C gene.

2. A method according to claim 1, wherein the Net bloch contains a G79R and/or N75S mutation in the succinate dehydrogenase subunit C gene.

3. A method according to claim 1, wherein the Ramularia contains a N224T mutation in the succinate dehydrogenase subunit B gene and/or a G171D, H146R, H153R and/or N87S mutation in the succinate dehydrogenase subunit C gene.

4. A method according to any of claims 1 to 3, wherein Pydiflumetofen is applied to the plants.

5. A method according to any of claims 1 to 3, wherein Pydiflumetofen is applied to the soil.

6. A method according to any of claims 1 to 3, wherein Pydiflumetofen is applied to the seed of plants.

7. A method according to any of claims 1 to 6, wherein Pydiflumetofen is applied in an amount from 5 g/ha to 2500 g/ha.

8. A method according to claim 6, wherein Pydiflumetofen is applied to seeds in an amount from 0.01 g to 10 kg per 100 kg.

9. Use of Pydiflumetofen for controlling Net bloch and/or Ramularia leaf spot on barley,
wherein the Net bloch contains a G79R and/or N75S mutation in the succinate dehydrogenase subunit C gene and/or a D145G mutation in the succinate dehydrogenase subunit D gene
and the Ramularia contains a N224T mutation in the succinate dehydrogenase subunit B gene and/or a G171D, H146R, H153R and/or N87S mutation in the succinate dehydrogenase subunit C gene.

## Patentansprüche

1. Verfahren zur Bekämpfung von Netzfleckenkrankheit und/oder Ramularia-Blattfleckenkrankheit auf Gerste, bei dem man die Pflanzen, ihr Saatgut oder den Boden mit einer fungizid wirksamen Menge von Pydiflumetofen behandelt, wobei die Netzfleckenkrankheit eine G79R- und/oder N75S-Mutation im Succinatdehydrogenase-Untereinheit-C-Gen und/oder eine D145G-Mutation im Succinatdehydrogenase-Untereinheit-D-Gen enthält und die Ramularia eine N224T-Mutation im Succinatdehydrogenase-Untereinheit-B-Gen und/oder eine G171D-, H146R-, H153R- und/oder N87S-Mutation im Succinatdehydrogenase-Untereinheit-C-Gen enthält.

2. Verfahren nach Anspruch 1, wobei die Netzfleckenkrankheit eine G79R- und/oder N75S-Mutation im Succinatdehydrogenase-Untereinheit-C-Gen enthält.

3. Verfahren nach Anspruch 1, wobei die Ramularia eine N224T-Mutation im Succinatdehydrogenase-Untereinheit-B-Gen und/oder eine G171D-, H146R-, H153R- und/oder N87S-Mutation im Succinatdehydrogenase-Untereinheit-C-Gen enthält.

4. Verfahren nach einem der Ansprüche 1 bis 3, wobei Pydiflumetofen auf die Pflanzen ausgebracht wird.

5. Verfahren nach einem der Ansprüche 1 bis 3, wobei Pydiflumetofen auf den Boden ausgebracht wird.

6. Verfahren nach einem der Ansprüche 1 bis 3, wobei Pydiflumetofen auf das Saatgut von Pflanzen ausgebracht wird.

7. Verfahren nach einem der Ansprüche 1 bis 6, wobei Pydiflumetofen in einer Menge von 5 g/ha bis 2500 g/ha ausgebracht wird.

8. Verfahren nach Anspruch 6, wobei Pydiflumetofen in einer Menge von 0,01 g bis 10 kg pro 100 kg auf Samen ausgebracht wird.

9. Verwendung von Pydiflumetofen zur Bekämpfung von Netzfleckenkrankheit und/oder Ramularia-Blattfleckenkrankheit auf Gerste, wobei die Netzfleckenkrankheit eine G79R- und/oder N75S-Mutation im Succinatdehydrogenase-Untereinheit-C-Gen und/oder eine D145G-Mutation im Succinatdehydrogenase-Untereinheit-D-Gen enthält und die Ramularia eine N224T-Mutation im Succinatdehydrogenase-Untereinheit-B-Gen und/oder eine G171D-, H146R-, H153R- und/oder N87S-Mutation im Succinatdehydrogenase-Untereinheit-C-Gen enthält.

## Revendications

1. Procédé destiné à contrôler une tache réticulée et/ou une ramulariose à tache de la feuille chez l'orge, comprenant un traitement des plantes, de leurs graines ou du sol avec une quantité de pydiflumetofen efficace d'un point de vue fongicide, dans lequel la tache réticulée contient une mutation G79R et/ou N75S dans le gène de la sous-unité C de la succinate déshydrogénase et/ou une mutation D145G dans le gène de la sous-unité D de la succinate déshydrogénase et le Ramularia contient une mutation N224T dans le gène de la sous-unité B de la succinate déshydrogénase et/ou une mutation G171D, H146R, H153R et/ou N87S dans le gène de la sous-unité C de la succinate déshydrogénase.

2. Procédé selon la revendication 1, dans lequel la tache réticulée contient une mutation G79R et/ou N75S dans le gène de la sous-unité C de la succinate déshydrogénase.

3. Procédé selon la revendication 1, dans lequel le Ramularia contient une mutation N224T dans le gène de la sous-unité B de la succinate déshydrogénase et/ou une mutation G171D, H146R, H153R et/ou N87S dans le gène de la sous-unité C de la succinate déshydrogénase.

4. Procédé selon l'une quelconque des revendications 1 à 3, dans lequel du pydiflumetofen est appliqué aux plantes.

5. Procédé selon l'une quelconque des revendications 1 à 3, dans lequel du pydiflumetofen est appliqué au sol.

6. Procédé selon l'une quelconque des revendications 1 à 3, dans lequel du pydiflumetofen est appliqué aux graines des plantes.

7. Procédé selon l'une quelconque des revendications 1 à 6, dans lequel du pydiflumetofen est appliqué en une quantité allant de 5 g/ha à 2 500 g/ha.

8. Procédé selon la revendication 6, dans lequel du pydiflumetofen est appliqué à des graines en une quantité allant de 0,01 g à 10 kg par 100 kg.

9. Utilisation de pydiflumetofen pour contrôler une tache réticulée et/ou la ramulariose à tache de la feuille chez l'orge, dans lequel la tache réticulée contient une mutation G79R et/ou N75S dans le gène de la sous-unité C de la succinate déshydrogénase et/ou une mutation D145G dans le gène de la sous-unité D de la succinate déshydrogénase
et le Ramularia contient une mutation N224T dans le gène de la sous-unité B de la succinate déshydrogénase et/ou une mutation G171D, H146R, H153R et/ou N87S dans le gène de la sous-unité C de la succinate déshydrogénase.
